# EUROPEAN PATENT SPECIFICATION

(11) **EP 0 826 302 B1**
(45) Date of publication and mention of the grant of the patent: **08.05.2002**
(21) Application number: 97306512.1
(22) Date of filing: 26.08.1997
(51) Int. Cl.: A01K 5/00, A01D 90/10

(54) **Material dispensing apparatus**
Futterverteileinrichtung
Appareil pour distribuer du fourage

(30) Priority: 29.08.1996 GB 9618027; 30.04.1997 GB 9708775
(43) Date of publication of application: 04.03.1998
(60) Divisional application: 01102039.3
(73) Proprietor: Garnett, Andrew John, Nr. Knutsford, Cheshire WA16 9NE (GB)
(72) Inventor: Garnett, Andrew John, Nr. Knutsford, Cheshire WA16 9NE (GB)
(74) Representative: Denmark, James

(56) References cited:
- EP-A- 0 598 494
- DE-A- 2 621 709
- DE-A- 3 402 085
- DE-B- 2 918 519

## Description

This invention concerns material dispensing apparatus, and particularly but not exclusively apparatus for dispensing chopped straw or similar materials.

Such an apparatus is shown in DE-B-2 918 519.

In cattle farming it is conventional to provide a plurality of stalls for cattle to sleep in. These are often arranged in line adjacent to a passageway along which a tractor or other vehicle can move. Such stalls are usually lined with chopped straw or perhaps sawdust or wood savings, which liner material requires regular renewal. Traditionally, straw has been chopped in situ by machinery and directed into the stalls. This is a very dusty job producing unpleasant working conditions.

According to the present invention there is provided material dispensing apparatus with the features of claim 1.

The conveyor is preferably operable at such a speed so as to project material from the apparatus. The conveyor preferably comprises an endless belt.

The agitating means is preferably constructed so as to provide a substantially constant flow of material from the receptacle to the conveyor. The agitating means may comprise an auger and preferably a pair of parallel augers arranged to rotate in opposite directions.

The receptacle is preferably in the form of an open-topped hopper, which desirably has an upwardly diverging cross-section. An opening is preferably provided at the bottom of the receptacle immediately above the conveyor.

The augers are preferably located extending across a lower part of the receptacle, with the opening located substantially therebelow.

The apparatus is removably mountable on a tractor or similar vehicle, and the agitating means and/or conveyor are preferably arranged to be drivable by the tractor or similar vehicle.

The hopper or apparatus is preferably arranged to be pivotal relative to a vehicle upon which the apparatus is mounted such that material can be scooped up by the hopper.

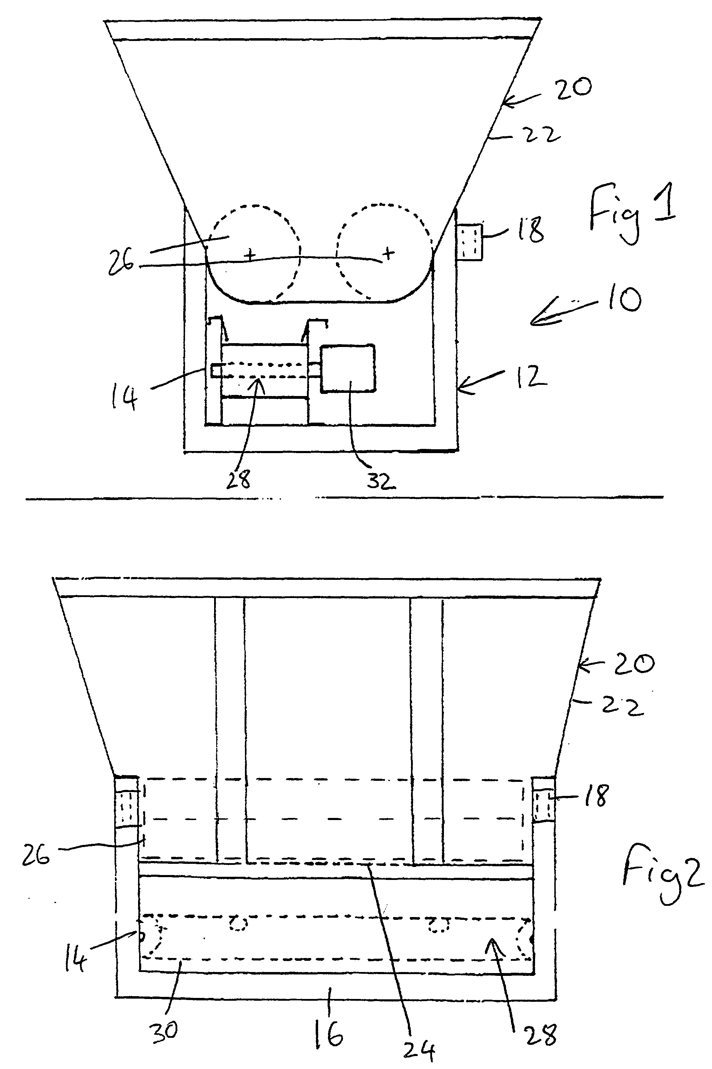

An embodiment of the present invention will now be described by way of example only with reference to the accompanying drawings, in which:-
Fig. 1 is a diagrammatic end view of apparatus according to the invention; and
Fig. 2 is a diagrammatic side view of the apparatus of Fig. 1.

The drawings show material dispensing apparatus 10 suitable for dispensing material such as chopped straw into cattle stalls. The apparatus 10 comprises a frame 12 including two U-shaped members 14 spaced apart and interconnected by side bars 16. Additional cross-members (not shown) may be provided extending between the side bars 16. Mounting brackets 18 in the form of sleeves are provided on each of the members 14 on a respective one of the side limbs towards the upper end thereof.

A hopper 20 is mounted on the frame 12 with the lowermost part of the hopper 20 spaced above the base of the members 14. The hopper 20 has upwardly diverging walls 22. An opening 24 is provided in the base of the hopper 20. Located in the hopper 20 are a pair of augers 26 arranged parallel to the side bar 16, so as to rotate in opposite directions relative to each other. The augers 26 are arranged to be drivable by the hydraulic drive of a tractor or similar vehicle.

Mounted on the frame 12 beneath the hopper 20 is a high speed conveyor 28. The conveyor 28 comprises an endless belt 30 and extends parallel to the bars 16 for substantially the whole length thereof. The conveyor 28 is drivable by a motor 32 connectable to the hydraulic supply from a tractor or similar vehicle. The conveyor 28 is switchable so as to be selectively movable in either direction.

Operation of the apparatus will now be described. When not in use, the apparatus 10 can rest on the ground or elsewhere with the frame 12 engaging the ground. When it is required to use the apparatus 10, the apparatus 10 is mounted on a tractor or similar by fingers or other components on the front or perhaps elsewhere on the tractor, engaging in the sleeves 18. The augers 26 and motor 32 are connected to the hydraulic supply of the tractor. The frame 12 can then be lifted off the ground. The apparatus 10 can be pivotted relative to the tractor to permit chopped straw to be scooped up from a pile into the hopper 20. Once the hopper 20 contains straw it can be returned to a horizontal alignment.

When the tractor is adjacent a cattle stall or other location where chopped straw is to be delivered, the augers 26 and conveyor 28 are operated. The augers 26 prevent bridging or other blocking of the straw and provide a substantially constant stream of straw onto the conveyor 28. The speed of the conveyor 28 is such as to project straw thereoff into a required place. The direction of the conveyor 28 can obviously be switched to a required direction depending on the orientation of the tractor relative to the cattle stores etc. Once a load of straw has been dispensed the hopper 20 can be reloaded in a similar manner.

There is thus described apparatus which permits material such as chopped straw to readily be dispensed into required locations. The apparatus permits ready loading thereof and dispensing in a required direction dependent on the orientation of a carrying vehicle. The apparatus is of relatively simply construction and thus permits inexpensive manufacture and reliable operation. Using this apparatus permits chopped straw to be distributed in a way which is much more friendly to workers. The straw can initially be chopped where harvested, i.e. out of doors, and stored chopped.

Various modifications may be made without departing from the scope of the invention. For example, different means could be provided for agitating the product in the hopper. The hopper could be arranged to be pivotal on the frame to facilitate loading of material thereinto. Any appropriate mounting means could be provided on the frame. Whilst the embodiment is described in relation to spreading chopped straw, such apparatus could readily be used for dispensing a wide range of material such as for instance wood shavings or sawdust.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Material dispensing apparatus (10), the apparatus (10) comprising a receptacle (20) for material to be dispensed, means (26) for agitating material within the receptacle (20), a conveyor (28) in communication with the receptacle (20) to receive material therefrom and to dispense material from the apparatus (10), **characterised in that** the conveyor (28) extends transversely and is reversible so as to permit material to be selectively dispensed to opposite sides of the apparatus (10), the apparatus (10) being removably mountable on a tractor or similar vehicle to be carried thereby.

2. Apparatus according to claim 1, **characterised in that** the conveyor (28) is operable at such a speed so as to project material from the apparatus (10).

3. Apparatus according to claim 1 or 2, **characterised in that** the conveyor (28) comprises an endless belt (30).

4. Apparatus according to any of the preceding claims, **characterised in that** the agitating means (26) is constructed so as to provide a substantially constant flow of material from the receptacle (20) to the conveyor (28).

5. Apparatus according to any of the preceding claims, **characterised in that** the agitating means comprises an auger (26).

6. Apparatus according to claim 5, **characterised in that** the agitating means comprises a pair of parallel augers (26) arranged to rotate in opposite directions.

7. Apparatus according to any of the preceding claims, **characterised in that** an opening (24) is provided at the bottom of the receptacle (20) immediately above the conveyor (28).

8. Apparatus according to claim 7 when dependent on claims 5 or 6, **characterised in that** the or each auger (26) is located extending across a lower part of the receptacle (20), with the opening (24) located substantially therebelow.

9. Apparatus according to any of the preceding claims, **characterised in that** the receptacle is in the form of an open-topped hopper (20).

10. Apparatus according to claim 9, **characterised in that** the hopper (20) has an upwardly diverging cross-section.

11. Apparatus according to any of the preceding claims, **characterised in that** the agitating means (26) and/or conveyor (28) are arranged to be drivable by the tractor or similar vehicle.

12. Apparatus according to any of the preceding claims, **characterised in that** the receptacle (20) or apparatus (10) is arranged to be pivotal relative to a vehicle upon which the apparatus (10) is mounted such that material can be scooped up by the receptacle (20).

## Patentansprüche

1. Futterverteilanlage (10), wobei die Anlage (10) einen Behälter (20) für das zu verteilende Futter enthält, eine Vorrichtung (26) zum Rühren des Futters in dem Behälter (20), ein Förderband (28) zur Verbindung mit dem Behälter (20) um Futter von diesem aufzunehmen und Futter aus der Anlage (10) zu verteilen, **dadurch gekennzeichnet, dass** sich das Förderband (28) in Querrichtung erstreckt und umschaltbar ist, so dass Futter selektiv zu entgegengesetzten Seiten der Anlage (10) verteilt werden kann, wobei die Anlage (10) beweglich auf einem Traktor oder einem ähnlichen Fahrzeug montiert werden kann um von diesem transportiert zu werden.

2. Anlage nach Anspruch 1, **dadurch gekennzeichnet, dass** das Förderband (28) mit einer solchen Geschwindigkeit betrieben werden kann, dass Futter aus dem Behälter (10) geschleudert wird.

3. Anlage nach Anspruch 1 oder 2, **dadurch gekennzeichnet, dass** das Förderband (28) ein endloses Band (30) aufweist.

4. Anlage nach einem der vorstehenden Ansprüche, **dadurch gekennzeichnet, dass** die Rührvorrichtung (26) so ausgeführt ist, dass sie einen im wesentlichen ständigen Futterstrom vom Behälter (20) zum Förderband (28) bewirkt.

5. Anlage nach einem der vorstehenden Ansprüche, **dadurch gekennzeichnet, dass** die Rührvorrichtung eine Schnecke (26) enthält.

6. Anlage nach Anspruch 5, **dadurch gekennzeichnet, dass** die Rührvorrichtung zwei parallele Schnecken (26) enthält, die so angeordnet sind, dass sie sich in entgegengesetzten Richtungen drehen.

7. Anlage nach einem der vorstehenden Ansprüche, **dadurch gekennzeichnet, dass** unten am Behälter (20), direkt über dem Förderband (28) eine Öffnung (24) vorgesehen ist.

8. Anlage nach Anspruch 7, wenn abhängig von Anspruch 5 und 6, **dadurch gekennzeichnet, dass** sich die oder jede Schnecke (26) über den unteren Teil des Behälters (20) erstreckt, wobei sich die Öffnung (24) im wesentlichen unter dieser befindet.

9. Anlage nach einem der vorstehenden Ansprüche, **dadurch gekennzeichnet, dass** der Behälter die Form eines oben geöffneten Bunkers (20) aufweist.

10. Anlage nach Anspruch 9, **dadurch gekennzeichnet, dass** der Bunker (20) einen sich nach oben aufweitenden Querschnitt aufweist.

11. Anlage nach einem der vorstehenden Ansprüche, **dadurch gekennzeichnet, dass** die Rührvorrichtung (26) bzw. das Förderband (28) so angeordnet sind, dass sie von einem Traktor oder ähnlichen Fahrzeug angetrieben werden können.

12. Anlage nach einem der vorstehenden Ansprüche, **dadurch gekennzeichnet, dass** der Behälter (20) oder die Anlage (10) so angeordnet sind, dass sie im Verhältnis zu einem Fahrzeug, auf das die Anlage (10) montiert ist, so gekippt werden können, dass das Futter von dem Behälter (20) aufgeschaufelt werden kann.

## Revendications

1. Appareil pour distribuer du fourrage (10), l'appareil (10) comprenant un réceptacle (20) pour le fourrage destiné à être distribué, des moyens (26) permettant de remuer le fourrage dans le réceptacle (20), un convoyeur (28) en communication avec le réceptacle (20) afin de recevoir le fourrage de celui-ci et de distribuer le fourrage depuis l'appareil (10), **caractérisé en ce que** le convoyeur (28) se prolonge dans le sens transversal et est réversible de façon à permettre au fourrage d'être distribué de manière sélective vers les côtés opposés de l'appareil (10), l'appareil (10) pouvant être monté de façon amovible sur un tracteur, ou un véhicule similaire destiné à être tracté par celui-ci.

2. Appareil, selon la revendication 1, **caractérisé en ce que** le convoyeur (28) peut être exploité à une vitesse telle qu'il est possible de projeter le fourrage à partir de l'appareil (10).

3. Appareil, selon la revendication 1 ou 2, **caractérisé en ce que** le convoyeur (28) comprend une courroie sans fin (30).

4. Appareil, selon l'une quelconque des revendications précédentes, **caractérisé en ce que** les moyens d'agitation (26) sont construits de manière à fournir un débit essentiellement constant de fourrage depuis le réceptacle (20) jusqu'au convoyeur (28).

5. Appareil, selon l'une quelconque des revendications précédentes, **caractérisé en ce que** les moyens d'agitation comprennent une vis transporteuse (26).

6. Appareil, selon la revendication 5, **caractérisé en ce que** les moyens d'agitation comprennent une paire de vis transporteuses parallèles (26) agencées de manière à tourner dans des sens opposés.

7. Appareil, selon l'une quelconque des revendications précédentes, **caractérisé en ce qu'**une ouverture (24) est prévue au fond du réceptacle (20) immédiatement au-dessus du convoyeur (28).

8. Appareil, selon la revendication 7 lorsque les stipulations sont subordonnées aux revendications 5 ou 6, **caractérisé en ce que** chaque vis transporteuse ou que la vis transporteuse (26) est positionnée de façon à s'étendre en travers une partie inférieure du réceptacle (20), alors que l'ouverture (24) est située sensiblement sous celui-ci.

9. Appareil, selon l'une quelconque des revendications précédentes, **caractérisé en ce que** le réceptacle se présente sous la forme d'une trémie ayant une ouverture supérieure (20).

10. Appareil, selon la revendication 9, **caractérisé en ce que** la trémie (20) possède une coupe transversale s'élargissant vers le haut.

11. Appareil, selon l'une quelconque des revendications précédentes, **caractérisé en ce que** les moyens d'agitation (26) et/ou le convoyeur (28) sont agencés de manière à ce que leur entraînement puisse être assuré par le tracteur ou un véhicule similaire.

12. Appareil, selon l'une quelconque des revendications précédentes, **caractérisé en ce que** le réceptacle (20) ou l'appareil (10) est agencé de manière à pouvoir pivoter par rapport au véhicule sur lequel l'appareil (10) est monté de sorte que le fourrage puisse être ramassé par le réceptacle (20).
